# EUROPEAN PATENT APPLICATION

(11) **EP 1 052 057 A2**
(43) Date of publication of application: **15.11.2000**
(21) Application number: 00303722.3
(22) Date of filing: 03.05.2000
(51) Int. Cl.: B23Q 5/027, B23Q 5/34, B23Q 5/22

(54) **An automatic lathe and a drilling method of an automatic lathe**

(30) Priority: 13.05.1999 JP 13223599
(71) Applicant: STAR MICRONICS CO., LTD., Shizuoka-shi, Shizuoka-ken 422-8654 (JP); Murakawa, Masao, Saitama (JP)
(72) Inventor: Kato, Toshifumi, Shizuoka-shi, Shizuoka 422 (JP); Murakawa, Masao, Minamisaitamagun, Saitama (JP); Jin, Masahiko, Shimotsugagun, Tochigi (JP)
(74) Representative: Skone James, Robert Edmund

(57) **Abstract**

An automatic lathe comprising, a tool post (1) having a rotative driving source (6), and a vibration cutting unit (7) detachably mounted on the tool post (1) having a drilling tool (49) to perform drilling by applying vibration to the drilling tool (49) by driving power from the rotative driving source (6). There is also a drilling method of an automatic lathe by applying vibration to a drilling tool (49) by using driving power from a rotative driving source (6) of a tool post (1).

## Description

The present invention relates to an automatic lathe and a drilling method of the automatic lathe. More particularly, the present invention relates to an automatic lathe having a tool post provided with a rotative driving source, wherein a vibration cutting unit is detachably mounted on the tool post, so that drilling can be carried out by applying vibration to a drilling tool of the vibration cutting unit by using the rotative driving source.

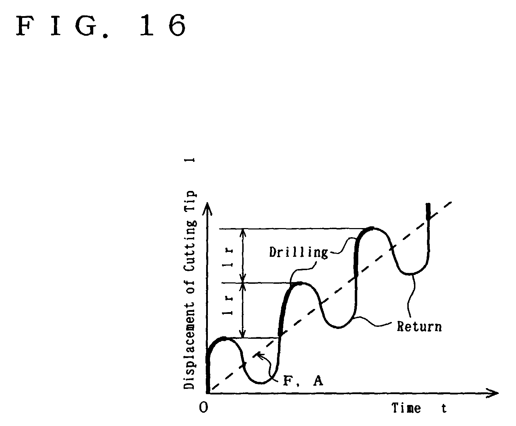

There has been known so-called "vibration cutting", in which, for example, the working is carried out by applying regular vibration to a tool in the feeding direction so that intermittent cutting can be carried out, as illustrated in Fig. 16. When drilling (for example, drilling of small diameter hole) is performed by using this type of vibration cutting, the accuracy of hole drilling may improve, as well as the friction during drilling may be reduced, thus there is a merit of reduction of damage to the drill and debris sticking to a cutting edge of the drill.

Fig. 16 is a characteristic graphic chart showing relation of time (t) in the horizontal axis and the displacement of cutting edge (l) in the vertical axis. In Fig. 16, reference numeral "1r" shows an amount of cut per vibration.

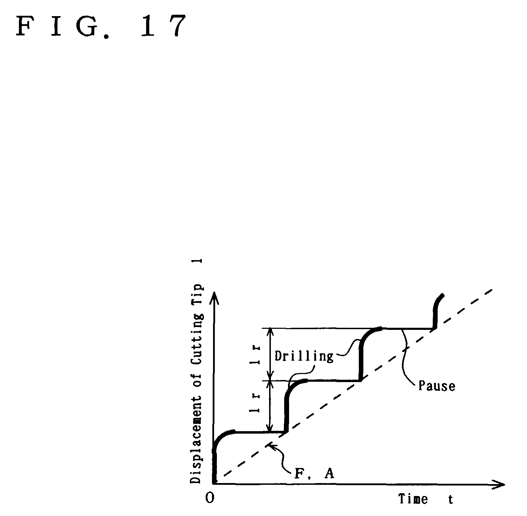

With regard to a drilling method, there has been known so-called "step vibration cutting method" suggested by two of the present inventors, of which characteristic is shown in Fig. 17. According to this "step vibration drilling method", there is a tool supported to be movable in a feeding direction, with a striking means positioned at the rear thereof. The striking means is to be vibrated in the feeding direction, and there is a clearance between the tool and the striking means of which distance is more than the amplitude. Thus, the cutting is performed only when the striking means strikes the tool, and the cutting is not performed (pauses) when the striking means moves away from the tool, thereby the intermittent cutting can be carried out. This "step vibration cutting method" has a merit, in addition to the same merit of the ordinary vibration cutting method as above described in regard to drilling, that the problem of chipping and abnormal abrasion of the cutting edge is eliminated, which has been fatal to the vibration cutting method when cutting a material of inferior machinability.

Fig. 17 is also a characteristic graphic chart showing relation of time (t) in the horizontal axis and the displacement of cutting edge (l) in the vertical axis. In Fig. 17, reference numeral "1r" also shows an amount of cut per vibration.

However, the above prior arts have the following disadvantages.

Although there has been suggested a vibration cutting unit which performs the vibration cutting as above discussed, there is not provided such a vibration cutting unit that is mounted on an automatic lathe. In particular, since the vibration cutting unit requires a driving source unit which applies a predetermined vibration to the tool, if the vibration cutting unit is to be mounted on the automatic lathe, an additional driving source should be required, which would then result in larger overall size and more complicated structure of the machine.

Further, as to the step vibration cutting method, since there is not provided the vibration cutting unit mounted on the automatic lathe, the same problem as above discussed will arise.

It is an object of the present invention to provide an automatic lathe provided with a vibration cutting unit or a step vibration cutting unit, as well as a drilling method according to said automatic lathe which can be realized by simple structure without requiring additional driving source.

To achieve the object mentioned above, according to claim 1 of the present invention, there is provided an automatic lathe, comprising, a tool post provided with a rotative driving source; and a vibration cutting unit detachably-mounted on the tool post and having a drilling tool; wherein a drilling is carried out by applying vibration to the drilling tool by using driving power from the rotative driving source of the tool post.

According to claim 2 of the present invention, there is provided the automatic lathe according to claim 1, wherein the vibration cutting unit is a step vibration cutting unit comprising: a housing detachably mounted on the tool post; a shaft placed in the housing and receiving transmission of rotative movement from the rotative driving source of the tool post; a cam provided on the shaft; and a tool holder having a cam follower at the base thereof, the tool holder being movable in a perpendicular direction to an axis of the cam to bring the cam follower in contact with the cam.

According to clam 3 of the present invention, there is provided the automatic lathe according to claim 1, wherein the vibration cutting unit is a step vibration cutting unit comprising: a housing detachably mounted on the tool post; a shaft placed in the housing and receiving transmission of rotative movement from the rotative driving source of the tool post; a cam provided on the shaft; and a tool holder having a cam follower at the base thereof, the tool holder being rotative by receiving a transmission of rotative movement from the rotative driving source, and being movable in a perpendicular direction to an axis of the cam to bring the cam follower in contact with the cam.

According to claim 4 of the present invention, there is provided the automatic lathe according to claim 2 or claim 3, wherein the step vibration cutting unit has an elastic member which always applies biasing force to the tool holder in the direction of drilling.

According to claim 5 of the present invention, there is provided the automatic lathe according to claim 1, wherein the vibration cutting unit comprising: a housing detachably mounted on the tool post; a shaft placed in the housing and receiving transmission of rotative movement from the rotative driving source of the tool post; a cam provided on the shaft; and a tool holder connected to the cam at the base, the tool holder being movable in a perpendicular direction to an axis of the cam.

According to claim 6 of the present invention, there is provided the automatic lathe according to claim 1, wherein the vibration cutting unit comprising: a housing detachably mounted on the tool post; a shaft placed in the housing and receiving transmission of rotative movement from the rotative driving source of the tool post; a cam provided on the shaft; and a tool holder connected to the cam at the base, the tool holder being rotative by receiving a transmission of rotative movement from the rotative driving source, and being movable in a perpendicular direction to an axis of the cam.

According to claim 7 of the present invention, there is provided the automatic lathe according to claim 2 or claim 3 or claim 5 or claim 6, wherein vibration speed can be adjusted and set by selecting shape of the cam.

According to claim 8 of the present invention, there is provided the automatic lathe according to claim 2 or claim 3 or claim 5 or claim 6, wherein vibration speed can be adjusted and set by selecting rotation speed of the rotative driving source of the tool post.

According to claim 9 of the present invention, there is provided a drilling method of an automatic lathe comprising a step of drilling by applying vibration to a drilling tool by using driving power transmitted from a rotative driving source of a tool post.

According to claim 10 of the present invention, there is provided the drilling method of an automatic lathe according to claim 9, wherein the drilling is performed by applying step vibration to the drilling tool.

Further, according to claim 11 of the present invention, there is provided the drilling method of an automatic lathe according to claim 9 or claim 10, further comprising a step of rotating the drilling tool by using rotative power transmitted from the rotative driving source of the tool post.

According to the present invention, "vibration cutting" means the method of cutting by the drilling tool vibrating in the feeding direction, in a state that the top (cutting edge) of the drilling tool draws a locus of repeated forward and rearward movement, and that the cutting edge of the drilling tool moves away from a cutting point of a workpiece during rearward movement. The characteristic thereof is as per illustrated Fig. 16.

Further, according to the present invention, "step vibration cutting" means the method of cutting in which the striking means provided at the rear of the drilling tool vibrates in the feeding direction and strikes the drilling tool so that the drilling means may carry out cutting. According to this "step vibration cutting", when the striking means makes the forward movement, the drilling means carries out cutting in the same manner as that of the above discussed ordinary "vibration cutting", and when the striking means makes the rearward movement, the top (cutting edge) of the drilling tool remains in contact with the cutting point of the workpiece. The characteristic of this cutting is as per illustrated in Fig. 17.

According to the automatic lathe of the present invention, the tool post provided with a rotative driving source has the vibration cutting unit mounted, so that vibration may be applied to the drilling tool of the vibration cutting unit by using the rotative driving source of the tool post. Therefore, desirous vibration cutting or step vibration cutting can be carried out without requiring any additional rotative driving source.

With this structure, when there is provided the vibration cutting unit comprising, the housing detachably mounted on the tool post; the shaft placed in the housing and receiving transmission of rotative movement from the rotative driving source of the tool post; the cam provided on the shaft; and the tool holder having the cam follower at the base thereof, the tool holder being movable in the perpendicular direction to the axis of the cam to bring the cam follower in contact with the cam, so that vibration can be applied to the drilling tool by driving the cam by means of rotative driving source of the tool post, the drilling by the step vibration method can be carried out with simple structure, and the chipping or abnormal abrasion of the cutting edge can be prevented.

Further, when the shape of the cam serving as the striking means is changed to the appropriate one, the vibration speed applied to the drilling tool can be easily adjusted to an arbitrary speed without adjusting the rotation speed of the rotative driving source of the tool post.

When there is provided the vibration cutting unit comprising, the housing detachably mounted on the tool post; the shaft placed in the housing and receiving transmission of rotative movement from the rotative driving source of the tool post; the cam provided on the shaft; and the tool holder having the cam follower at the base thereof, the tool holder being rotative by receiving the transmission of rotative movement from the rotative driving source, and being movable in the perpendicular direction to the axis of the cam to bring the cam follower in contact with the cam, since the application of vibration to the drilling tool and the rotation of the drilling tool are performed at the same time, in addition to the merits of the drilling by the step vibration method as above described, it is also possible to carry out drilling at any position deviating from the center of the end surface of the workpiece, or carry out drilling in the direction at any tilted angle.

When there is provided the step vibration cutting unit having the elastic member which always applies biasing force to the tool holder in the direction of drilling, it is possible to stably and surely maintain the top (cutting edge) of the tool in contact with the cutting point of the workpiece.

Further, when there is provided the vibration cutting unit comprising, the housing detachably mounted on the tool post; the shaft placed in the housing and receiving transmission of rotative movement from the rotative driving source of the tool post; the cam provided on the shaft; and the tool holder connected to the cam at the base, the tool holder being movable in the perpendicular direction to the axis of the cam, or the other type of tool holder, connected to the cam at the base, the tool holder being rotative by receiving the transmission of rotative movement from the rotative driving source, and being movable in the perpendicular direction to an axis of the cam, the ordinary vibration cutting can be carried out by simple structure.

Regardless of the ordinary vibration cutting method or the step vibration cutting method, the vibration speed can be adjusted by adjusting the rotation speed of the rotative driving source of the tool post. Further, as to the step vibration cutting method, as above discussed, the vibration speed can also be adjusted by changing the shape of the cam.

The invention will be described below in detail with reference to the accompanying drawings, in which:
Figure 1 is a sectional view showing a structure of a turret type tool post and a vibration cutting unit mounted thereon according to a first embodiment of the present invention;
Figure 2 is an expanded sectional view of the vibration cutting unit of Fig. 1;
Figure 3 is a sectional view showing a state that the vibration cutting unit is about to be mounted on the turret type tool post, according to the first embodiment of the present invention;
Figure 4 is a sectional view showing a relation of a cam shaft, a pressing member, a cam follower and a drilling tool, in the order of movement, according to the first embodiment of the present invention;
Figure 5 is a sectional view showing the relation of the cam shaft, the pressing member, the cam follower and the drilling tool, in the order of movement, according to the first embodiment of the present invention;
Figure 6 is a sectional view showing the relation of the cam shaft, the pressing member, the cam follower and the drilling tool, in the order of movement, according to the first embodiment of the present invention;
Figure 7 is a sectional view showing the relation of the cam shaft, the pressing member, the cam follower and the drilling tool, in the order of movement, according to the first embodiment of the present invention;
Figure 8 is a sectional view showing the relation of the cam shaft, the pressing member, the cam follower and the drilling tool, in the order of movement, according to the first embodiment of the present invention;
Figure 9 is a sectional view showing the relation of the cam shaft, the pressing member, the cam follower and the drilling tool, in the order of movement, according to the first embodiment of the present invention;
Figure 10 is a sectional view showing the relation of the cam shaft, the pressing member, the cam follower and the drilling tool, in the order of movement, according to the first embodiment of the present invention;
Figure 11 is a sectional view showing the relation of the cam shaft, the pressing member, the cam follower and the drilling tool, in the order of movement, according to the first embodiment of the present invention;
Figure 12 is a sectional view showing the relation of the cam shaft, the pressing member, the cam follower and the drilling tool, in the order of movement, according to the first embodiment of the present invention;
Figure 13 is a sectional view showing a structure of a turret type tool post and a vibration cutting unit according to a second embodiment of the present invention;
Figure 14 is a sectional view showing a structure of the vibration cutting unit during non-rotation of a tool, when the present invention is applied to a vibration cutting method;
Figure 15 is a sectional view showing a structure of the vibration cutting unit during rotation of the tool, when the present invention is applied to the vibration cutting method;
Figure 16 is a graphic chart showing a relation between displacement of cutting edge and time according to the vibration cutting method; and
Figure 17 is a graphic chart showing a relation between displacement of cutting edge and time according to the step vibration cutting method.

### First Embodiment

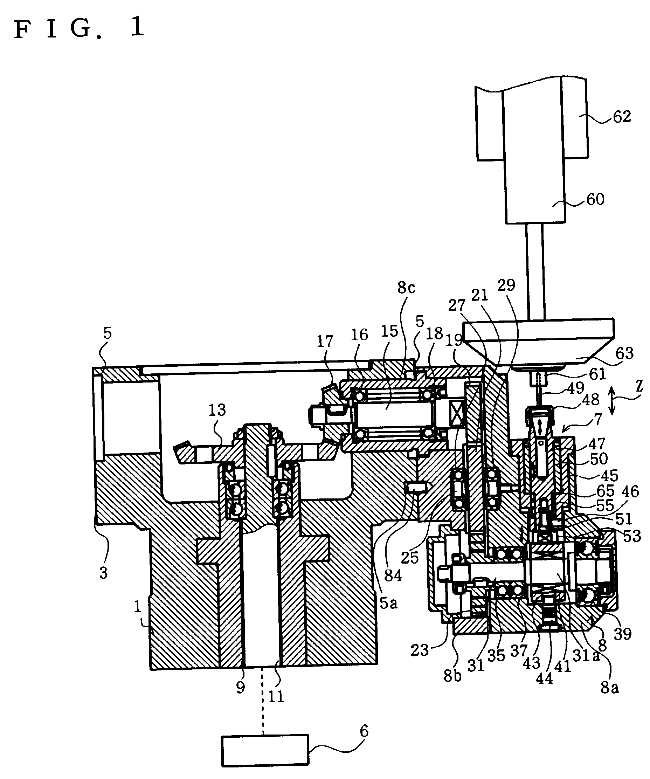

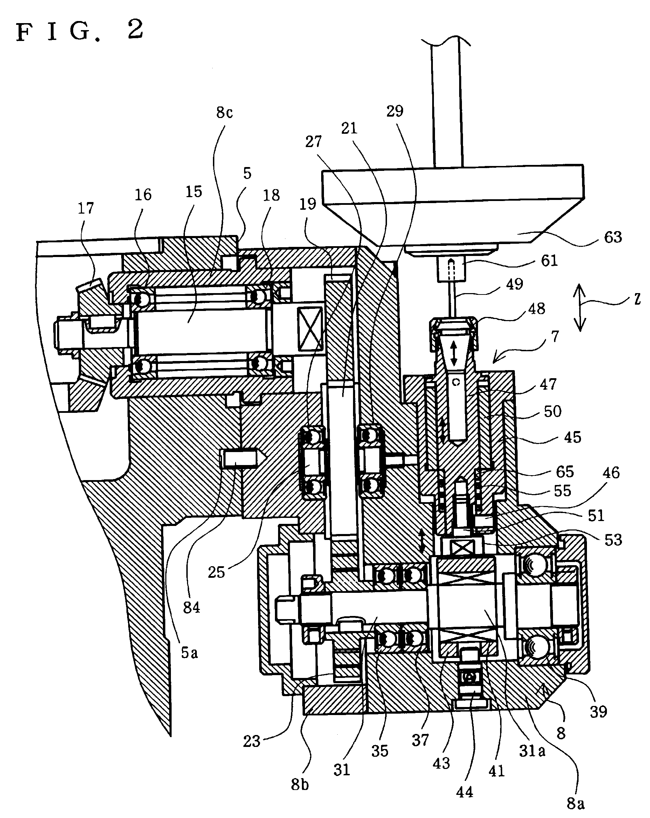

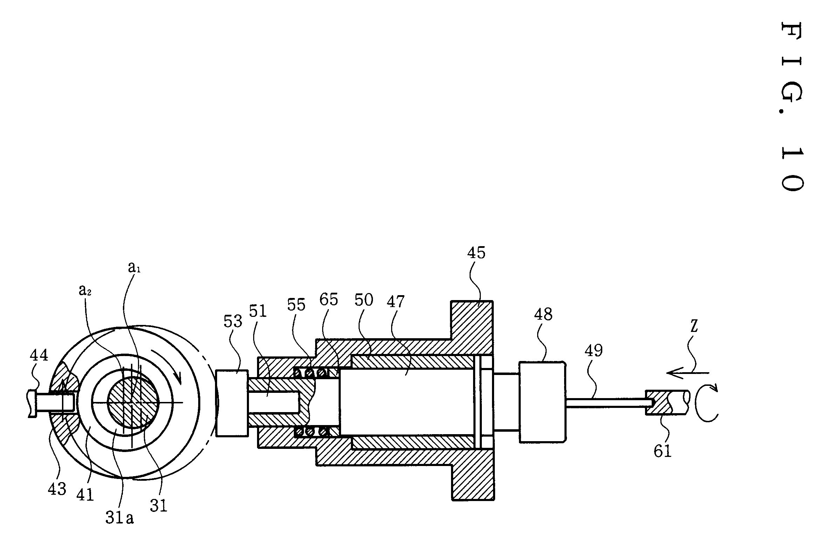

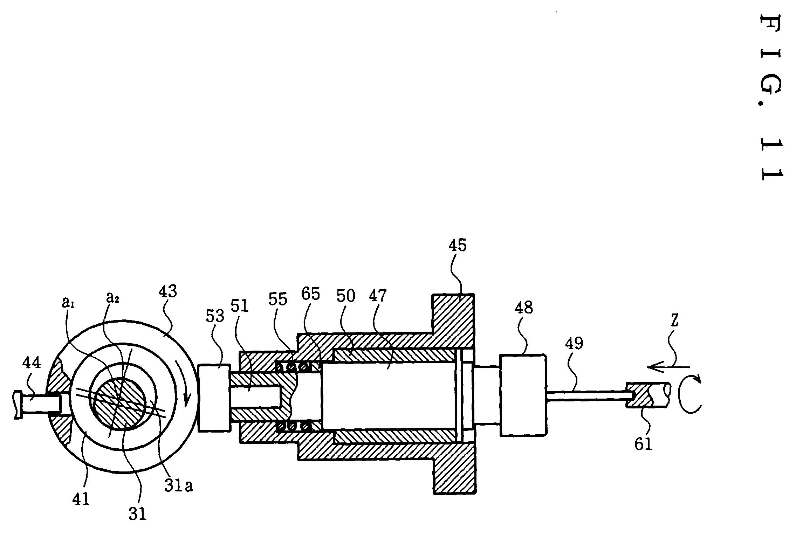

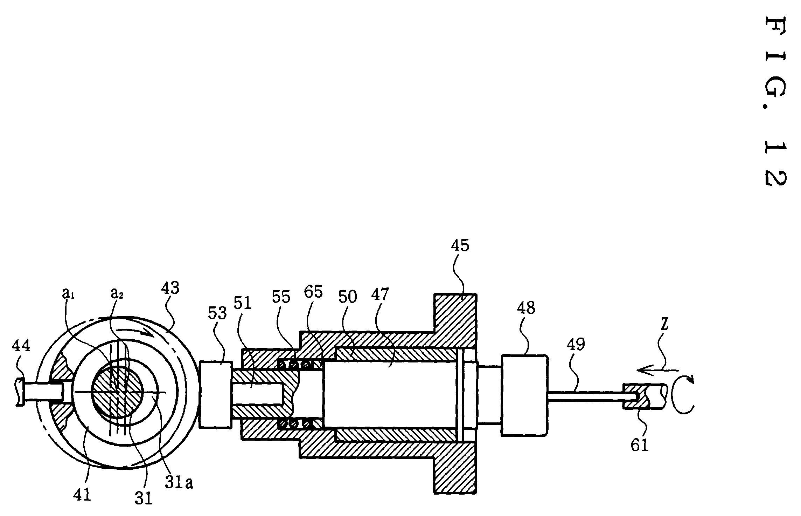

A first embodiment of the present invention will now be described with reference to Figures 1 through 12. Fig. 1 is a sectional view showing a partial structure of an automatic lathe, in which a vibration cutting unit is mounted on a turret type tool post serving as a tool post. Fig. 2 is also a sectional view in which the structure of the vibration cutting unit of Fig. 1 has been expanded. The structure thereof will be described in detail as follows.

There is a turret type tool post 1, to which a turret 3 is rotatably attached for indexing. The turret 3 has a plurality of tool mount surfaces 5, and a vibration cutting unit 7 is detachably mounted on one of the tool mount surfaces 5.

There is a rotation transmission means 9 provided inside the turret type tool post 1 in order to rotate a rotative tool. In particular, there is a driving shaft 11 incorporated in the turret type tool post 1, and a bevel gear 13 is secured to the top of the driving shaft 11. When the driving shaft 11 is rotated by a rotative driving source 6 (imaginarily illustrated in Fig. 1), the bevel gear 13 is also rotated.

The structure of the vibration cutting unit 7 will now be described. There is a housing 8, comprising a first body section 8a, a second body section 8b and a third body section 8c according to the present case, so that the housing 8 may be detachably mounted to one of the tool mount surface 5 via the second body section 8b and the third body section 8c. A positioning pin 84 is pressed and fixed on the end surface of the second body section 8b facing to the tool mount surface 5. When the third body section 8c is inserted in the tool mount surface 5, and at the same time, when the positioning pin 84 is inserted in a hollow 5a of the tool mount surface 5, the position of the housing 8 is determined.

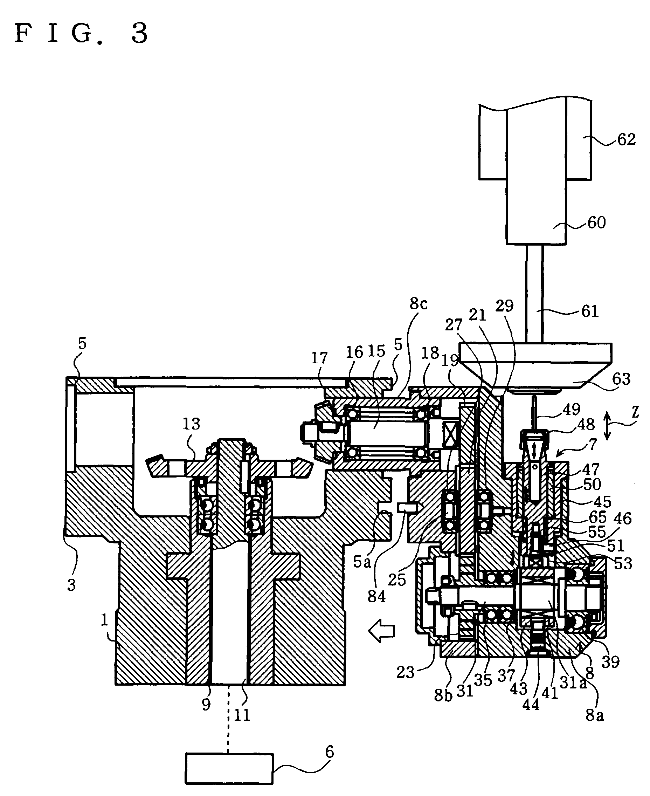

Fig. 3 shows the state that the vibration cutting unit 7 is about to be mounted on the turret type tool post 1.

There is a shaft 15 inside the housing 8, penetrating from the tool mount surface 5 to the inside of the turret type tool post 1. A bevel gear 17 is secured to one end of the shaft 15, so that the bevel gear 17 may be engaged with the bevel gear 13. There is a spur gear 19 secured to another end of the shaft 15. The shaft 15 is rotatively supported inside the third body section 8c by bearing members 16, 18. The spur gear 19 is engaged with another spur gear 21, and the spur gear 21 is further engaged with still another spur gear 23. The spur gear 21 is secured to a shaft 25, and the shaft 25 is rotatively supported by bearing members 27, 29.

The spur gear 23 is secured to a cam shaft 31 positioned parallel to the shaft 25. The cam shaft 31 is rotatively supported inside the housing 8 by bearing members 35, 37, 39. The cam shaft 31 has a cam provided between the bearing members 37 and 39. The cam comprises a cam part 31a, a bearing member 41 and a pressing member 43 according to the present embodiment.

The structure of this cam will now be described in detail. There is the cam part 31a formed on the cam shaft 31. The cam part 31a is an eccentric cam of which center is deviated by a predetermined amount from the axis of the cam shaft 31. The pressing member 43 is provided on the outer periphery of the cam part 31a via the bearing member 41. The rotation of pressing member 43 is prohibited by a rotation stopper pin 44. Consequently, when the cam shaft 31 rotates, the cam part 31a will also rotate, and at that time, according to the movement of the eccentric cam part 31a, the pressing member 43 of which rotation is prohibited makes reciprocation in the upward and downward directions of Figs. 1 and 2.

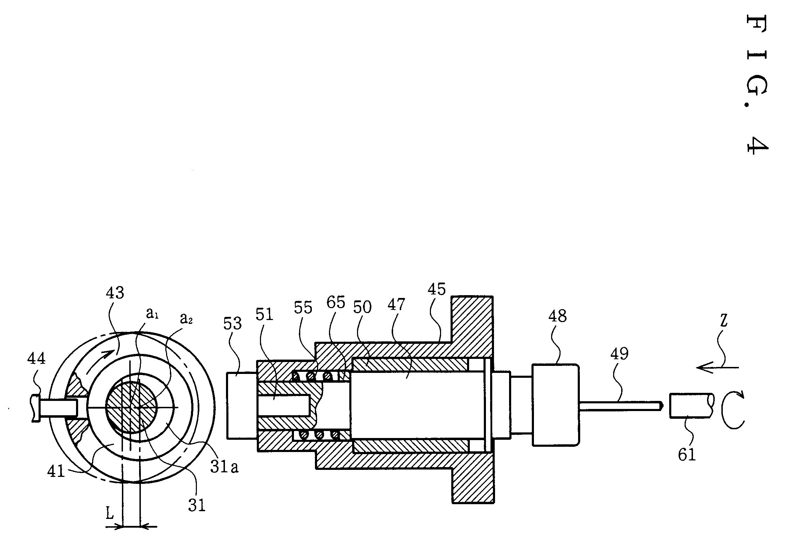

The relation of cam shaft 31, the cam part 31a, the bearing member 41 and the pressing member 43 is further described with reference to Fig. 4. The cam shaft 31 is illustrated by hatching in Fig. 4, on which the eccentric cam part 31a is formed. In Fig. 4, the axis of the cam shaft 31 is shown by reference letter a₁, and the axis of the cam part 31a is shown by reference letter a₂. As above discussed, there is the pressing member 43 provided via the bearing member 41 on the outer periphery of the cam part 31a. When the cam shaft makes one rotation, the axis a₂ of the cam part 31a displaces by the amount of L (double of the eccentric amount), and accordingly, the pressing member 43 of which rotation is prohibited makes reciprocation by the amount of L (double of the eccentric amount).

Now referring back to Figs. 1 and 2, there is a sleeve 45 incorporated in the housing 8. A drill holder 47 is incorporated in the sleeve 45 via a thrust bearing member 50 to be movable in the upward and downward directions of Figs. 1 and 2. The rotation of the drill holder 47 is prohibited by a rotation stopper pin 46. The drill holder 47 detachably holds, via a collet chuck part 48, a drill 49 serving as a drilling tool. Further, a screw member 51, of which head serves as a cam follower 53, is engaged with the base of the drill holder 47. A coil spring 55 is provided between the drill holder 47 and the sleeve 45, thus coil spring 55 always applies the biasing force in the upward direction of Figs. 1 and 2 to the drill holder 47.

As illustrated in Fig. 1, there is further provided a headstock 62 to be movable in a Z axis direction (upward and downward directions as shown in Fig. 2), rotatably holding a spindle 60. The top of a workpiece 61 held by the spindle 60 is supported by a guide bush 63 positioned in front of the spindle 60. In the present embodiment, the headstock 62 is moved at a predetermined cutting speed in the Z axis direction in a state that the spindle 60 is rotated, so that the drilling in the workpiece 61 may be carried out by the drill 49.

In Figs. 1 and 2, reference numeral 65 shows a collar. This collar 65 serves to adjust the biasing force of the coil spring 55.

Now the function of the present embodiment will be described with reference to Figs. 4 through 12. Figs. 4 through 12 are sectional views showing the drilling method by drill 49 in the order of procedure steps.

In the present embodiment, the turret type tool post 1 is fixed (that is, not rotated), and the headstock 62 provided with the spindle 60 is moved in the Z axis direction, so that the predetermined drilling in the workpiece 61 may be carried out by the drill 49. As illustrated in Fig. 4, the cam shaft 31 is always rotated, thus the pressing member 43 always makes reciprocation in the right and left directions of Fig. 4 (that is, makes reciprocation repeatedly between the position shown by actual line and the position shown by imaginary line of Fig. 4). In such a state, the headstock 62 of which spindle 60 being rotated is moved at a predetermined cutting speed in the Z axis direction.

When the headstock 62 is moved in the Z axis direction, the top surface of the workpiece 61 eventually becomes in contact with the drill 49. If the headstock 62 is further moved in the Z axis direction, the drill 49 and the drill holder 47 are pushed back in the left direction of Fig. 4 against the biasing force of the coil spring 55.

In this state, although the biasing force of the coil spring 55 is applied to the drill 49, the drilling in the workpiece 61 by the drill 49 will not be made. This is because the biasing force of the coil spring 55 is so adjusted that the drilling in the workpiece 61 by the drill 49 may not be made in this state.

If, due to change of material of the workpiece 61, the biasing force of the coil spring 55 should be adjusted, it is sufficient to change the collar 65 to another suitable one.

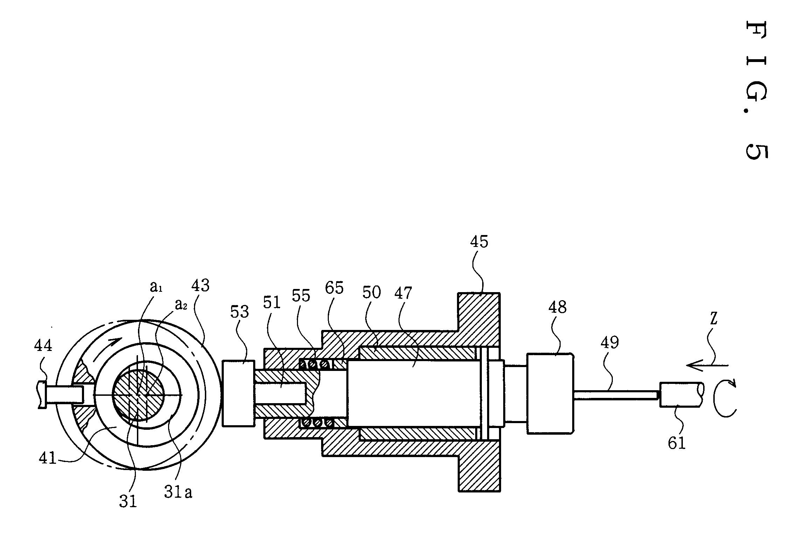

When the drill 49 and the drill holder 47 are pushed back, the top of the cam follower 53 becomes in contact with the pressing member 43. Since the pressing member 43 is always reciprocating, the timing at which the top of the cam follower 53 becomes in contact with the pressing member 43 may arbitrarily be determined, but as long as this explanation concerns, it is assumed that the top of the cam follower 53 becomes in contact with the pressing member 43 when the pressing member 43 has made the forward movement (that is, the movement in the right direction of the drawings) by the maximum amount in the right direction of the drawings. This state is as illustrated in Fig. 5.

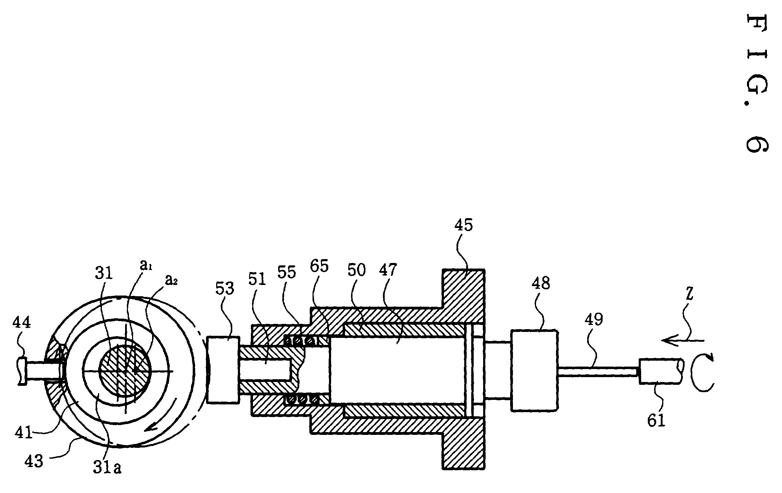

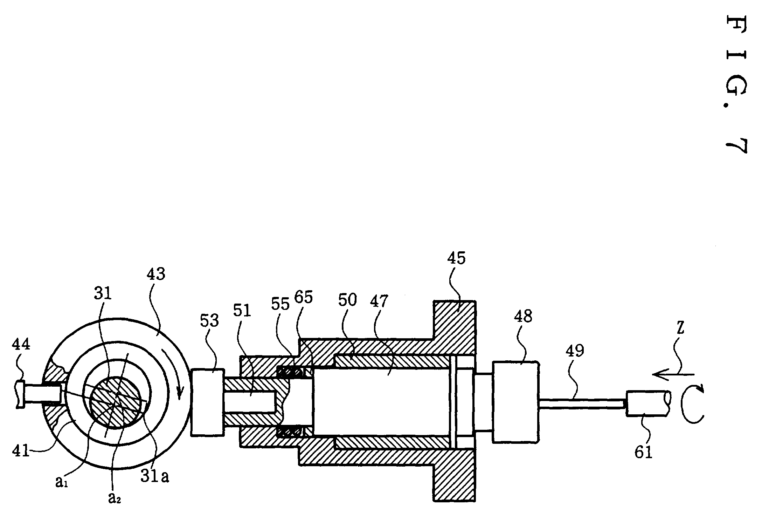

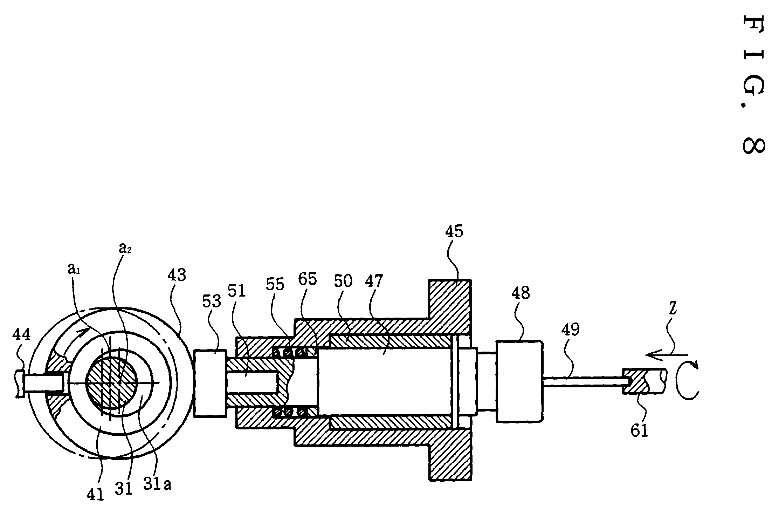

After that, the pressing member 43 will once makes return movement (the movement in the left direction of the drawings), and at that time, since the headstock 62 is continuously moving at the predetermined cutting speed in the Z direction, the drill 49 and the drill holder 47 are slightly pushed back in the left direction of Fig. 5. This state is as illustrated in Fig. 6. At the next timing, that is, when the pressing member 43 makes the next forward movement in the right direction, the pressing force is applied to the cam follower 53. From this timing, the cutting of the workpiece 61 by the drill 49 is started. That is, since the pressing force by the pressing member 43 is applied to the cam follower 53, further return movement of the drill 49 and the drill holder 47 are prohibited. At the same time, in regard to the workpiece 61, since the controlled movement of the headstock 62 in the Z axis direction is maintained, the cutting of the workpiece 61 by a predetermined amount by the drill 49 is carried out. This state is as illustrated in Figs. 7 and 8. The cutting is started in the state of Fig. 7, and the cutting is continued until reaching the state of Fig. 8.

After the state of Fig. 8, the pressing member 43 will start the return movement again. Thus the cutting of the workpiece 61 by the drill 49 is paused, and the drill 49 and the drill holder 47 are pushed back again by maintaining the "present state" due to the movement of the headstock 62 in the Z axis direction. The term "present state" as above described means the state that the cutting edge is still in contact with the workpiece at the cutting point. This is the feature of step vibration cutting. Accordingly, the drill 49 is pushed back with the cutting edge still in contact with the cutting point due to the biasing force of the coil spring 55.

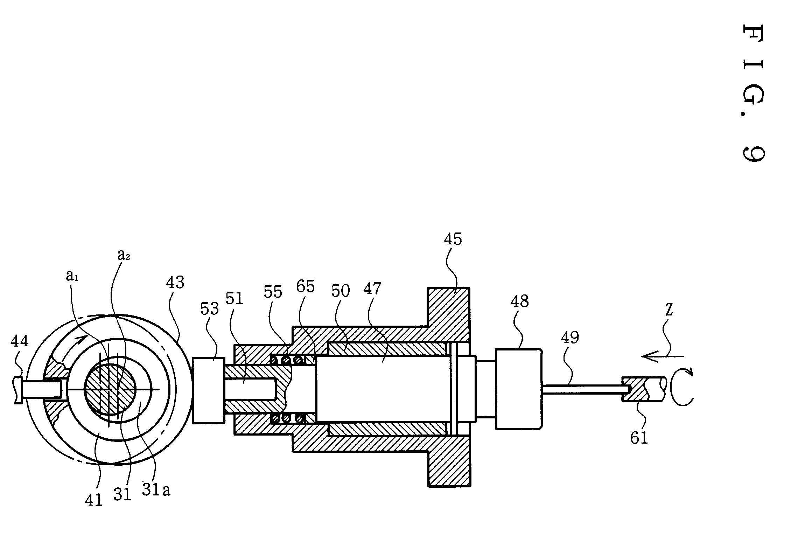

The cutting cycle as above discussed is repeated, of which steps are as illustrated in Figs. 9 through 12. That is, Fig. 9 corresponds to Fig. 5, Fig. 10 to Fig. 6, Fig. 11 to Fig. 7, and Fig. 12 to Fig. 8. Thus the step vibration cutting is carried out, thereby the cutting amount in the workpiece 61 by the drill 49 increases gradually, and eventually the predetermined depth of hole is available due to the controlled movement of the headstock 62 in the Z axis direction.

The present embodiment has the following merits.

First, an automatic lathe on which the vibration cutting unit 7 is mounted can be provided, and since a desired vibration can be obtained by using the rotative driving source provided in the turret type tool post 1 of the automatic lathe, that is, by using the rotative power transmitted via the shaft 11, any additional driving source in order to generate the vibration is no longer required, thereby the simple structure of the automatic lathe can be accomplished.

Further, according to the vibration cutting unit 7 of the present embodiment, since the cutting method is the step vibration type, that is, the intermittent cutting is repeated in a state that the cutting edge of the drill 49 is always in contact with the cut surface of the workpiece 61 due to the function of the coil spring 55, the chipping (damage to the cutting edge) of the drill 49 is effectively prevented, thereby the damage to the drill 49 is prevented, and the stable working can be carried out.

To be discussed in detail, Fig. 17 used as the reference to the prior art, shows the relation between the displacement of cutting edge and the time in the step vibration cutting method according to the present invention as above discussed. With reference to this graphic chart, the cutting edge draws the step-shape locus, in which, during forward movement of the tool by the cam serving as the striking means (shown by bold line), the cutting is carried out in the same manner as that of the ordinary vibration cutting method, and during return movement of the cam (shown by thin line), the drill is paused in still contact with the cutting point of the workpiece due to the biasing force of the coil spring 55.

In Fig. 17, reference letter F means the frequency, and reference letter A means the amplitude.

According to this step-type cutting mechanism, since the pulse waveform of cutting is almost the same as that of vibration cutting method, the same effect of cutting resistance reduction and working accuracy as those of the vibration cutting method can be obtained. Also, since there is no relative speed existing between the cutting edge and the workpiece during pausing of cutting, unnecessary abrasion of cutting edge can be prevented. Further, since the harmful impact of the workpiece against the drill will not directly affect the cutting edge, the load on the cutting edge can be lessened. Consequently, the chipping of cutting edge will effectively be prevented, thereby the life of the tool may become longer than that of the ordinary vibration cutting method.

When the material of the pressing member 43 and that of the cam follower 53 is compared, softer (and thus easier to be abraded) material is used for the cam follower 53, therefore it is the cam follower 53 that will be subject to the aged deterioration. However, since the cam follower 53 is the head part of the screw member 51 which is screwed in the drill holder 47, the screw member 51 can be replaced easily, thus the cam follower 53 can also be replaced easily.

### Second Embodiment

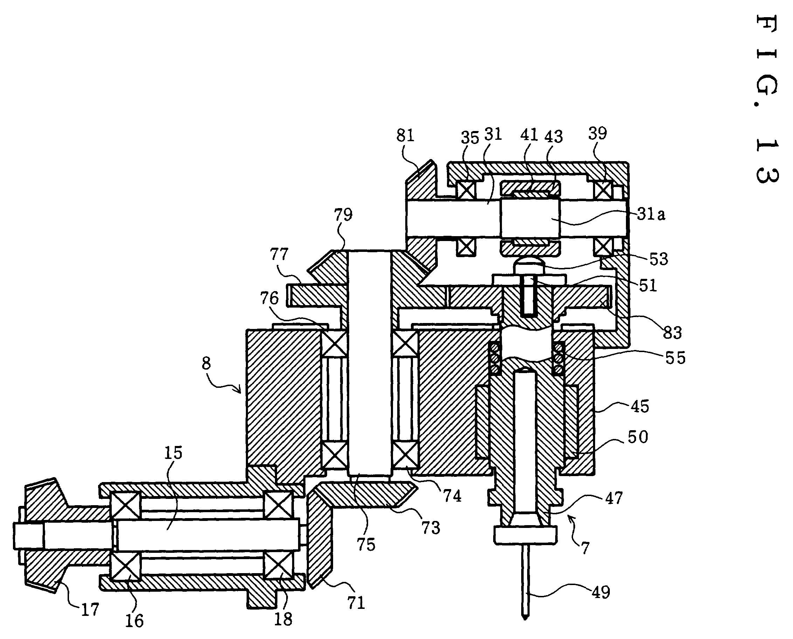

A second embodiment of the present invention will now be described with reference to Fig. 13. Although in the first embodiment, the drill 49 has been discussed as not to be rotative, according to the second embodiment, the rotative drill 49 is provided. On the other hand, according to the second embodiment, the spindle 60 is not rotative.

In the second embodiment, the explanation of the tool post will not be omitted. Further, the other structural parts except for those around the drill 49 are essentially the same as those of the first embodiment, the same reference numerals and letters as those of the first embodiment are used, thus the explanation thereof will also be omitted.

Now the structure of the second embodiment will be described in detail. There is a bevel gear 71 secured to the other end of the shaft 15, and another bevel gear 73 is engaged with the bevel gear 71. The bevel gear 73 is secured to one end of a shaft 75, and a gear 77 as well as a bevel gear 79 are secured to the other end of the shaft 75. The shaft 75 is rotatably supported by bearing members 74, 76 at both ends thereof. There is a bevel gear 81 secured to one end of the cam shaft 31, and the bevel gear 79 is engaged with the bevel gear 81. There is a gear 83 secured to the drill holder 47, and the gear 83 is engaged with the gear 77.

Accordingly, the same type of step vibration as that of the first embodiment is applied to the drill 49, and the rotative power is also supplied to the drill 49. With this structure as above discussed, the drilling can be carried out against the end surface of the workpiece 61 at any position deviating from the axis of the workpiece 61, and the drilling at any tilted angle against the workpiece 61 can also be carried out.

When a drilling is to be made at any tilted angle in the workpiece 61, the following structure would do for the purpose. With reference to Fig. 13, the housing 8 is mounted on the turret tool post 1 to be rotatable around the shaft 15 to position the housing 8 at an arbitrary angle to the turret tool post 1, thus tilting the axis of the drill 49 at an arbitrary angle against the axis of the workpiece 61.

For reference, this structure has been disclosed in Japanese Unexamined Patent Publication No. Hei 10-15703 applied by the applicant of the present invention.

Further, when the drilling at any deviating position from the axis of the workpiece 61 is to be made, such structure would do that the turret type tool post 1 is moved at any appropriate amount in the direction perpendicular to the Z axis direction (that is, the direction perpendicular to the axis of the drill 49).

### Third Embodiment

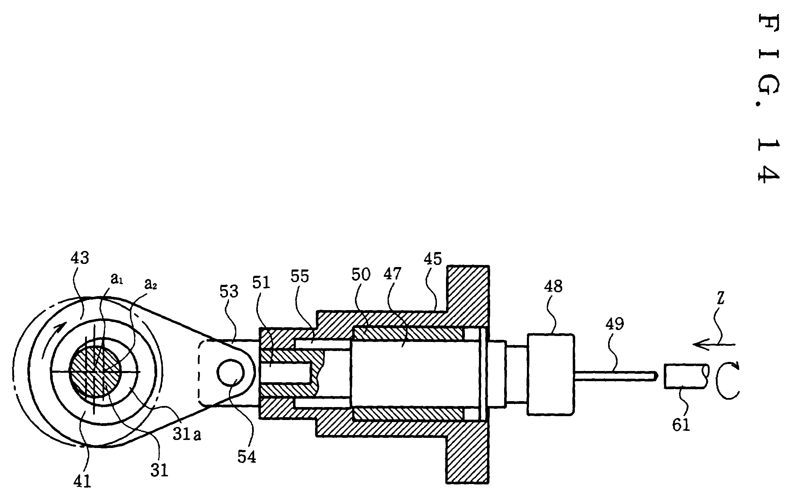

A third embodiment of the present invention will now be described with reference to Fig. 14. Although the first and second embodiments as above discussed relate to the step vibration cutting method, the present invention is not limited to this step type of vibration cutting method, but is also applicable to ordinary vibration cutting method.

In the third embodiment, the same reference numerals and letters are used for the structural parts as that of the first and second embodiments, thus the explanation thereof will be omitted.

The ordinary vibration cutting is available by connecting the cam shaft 31 and the drill holder 47 in the above discussed first and second embodiments. In particular, as illustrated in Fig. 14, the pressing member 43 and the cam follower 53 are rotatively connected by a pin 54.

In the third embodiment, as illustrated in Fig. 16 which has been used as the reference to the prior art, the cutting is performed only when the tool makes the forward movement (as shown by bold line), and when the tool makes the return movement, the cutting edge moves away from the cutting point of the workpiece.

### Fourth Embodiment

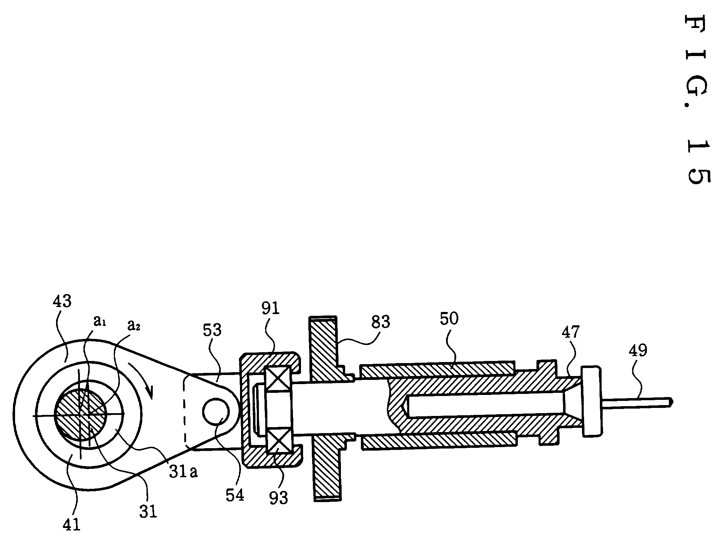

A fourth embodiment of the present invention will now be described with reference to Fig. 15.

In the fourth embodiment, the same reference numerals and letters are used for the structural parts as that of the first, second and third embodiments, thus the explanation thereof will be omitted.

According to the fourth embodiment, likewise the case of the third embodiment, the present invention is applied to the ordinary vibration cutting method, in which, the rotative power is transmitted further to the tool holder 47 from the turret type tool post 1, just in the same structure as that of the second embodiment. The tool holder 47 is rotatably supported by a holder 91 via a bearing member 93, thus the tool holder 47 can rotate and reciprocate at the same time.

The present invention is not limited to the first through fourth embodiments as described above.

First, in the first through fourth embodiments, the turret type tool post has been used as an example of explanation, but the present invention is of course not limited to the turret type tool post, and is applicable to various tool posts, such as a gang tool post, which are provided with the rotative driving source for rotating the tool.

The spindle 60 is rotative and the drill 49 is not rotative in the first embodiment, and on the other hand, the spindle 60 is not rotative and the drill 49 is rotative in the second embodiment. However, it is further possible that the spindle 60 and the drill 49 are both rotative, so that the desired working can be made by relative difference of the two rotative speeds.

In the first through fourth embodiments, the automatic lathe provided with the guide bush and with the headstock movable in the Z axis direction has been used as an example for the explanation of the invention. However, the present invention is of course not limited to this type of automatic lathe, and is applicable to any type of automatic lathe as long as it is provided with the tool post having the rotative driving source.

In the first and second embodiments, the pressing member 43 is provided via the bearing member 41 on the outer periphery of the cam part 31a of the cam shaft 31 so that the pressing member 43 may strike the cam follower 53. However, it is also possible that the cam part 31a directly strikes the cam follower 53.

In the first through fourth embodiments, the explanation has been made under a simplest example of setting condition that one vibration is generated when the spindle 60 makes one rotation, but the present invention is not limited to this setting condition. For example, it is possible that two or more vibrations are generated in one rotation by changing the shape of the cam or by adjusting the rotation speed of the rotative driving source of the tool post. How many vibrations should be generated per rotation may be adjusted, for example, in order to obtain the most appropriate vibration speed according to the material of the workpiece 61.

When the shape of the cam is changed so that two or more strikings can be made in one rotation, if one vibration can be generated in one rotation in such a state, the rotation speed of the rotative driving source of the tool post can be reduced. Consequently, the load on the rotative driving source can be lessened, thereby the minimized rotative driving source can be accomplished.

## Claims

1. An automatic lathe comprising:
a tool post (1) provided with a rotating driving source (6); and
a vibration cutting unit (7) detachably-mounted on said tool post (1) and having a drilling tool (49); wherein drilling is carried out by applying vibration to said drilling tool (49) by using driving power from said rotating driving source (6) of said tool post (1).

2. The automatic lathe as claimed in claim 1, wherein said vibration cutting unit (7) is a step vibration cutting unit comprising:
a housing (8) detachably mounted on said tool post (1);
a shaft (15) placed in said housing (8) and receiving transmission of rotary movement from said rotating driving source (6) of said tool post (1);
a cam (31) provided on said shaft (15); and
a tool holder (47) having a cam follower (53) at the base thereof, said tool holder (47) being movable in a perpendicular direction to an axis of said cam (31) to bring said cam follower (53) in contact with said cam (31).

3. The automatic lathe as claimed in claim 1, wherein said vibration cutting unit (7) is a step vibration cutting unit comprising:
a housing (8) detachably mounted on said tool post (1);
a shaft (15) placed in said housing (8) and receiving transmission of rotary movement from said rotating driving source (6) of said tool post (1);
a cam (31) provided on said shaft (15); and
a tool holder (47) having a cam follower (53) at the base thereof, said tool holder (47) being rotatable by receiving a transmission of rotary movement from said rotating driving source (6), and being movable in a perpendicular direction to an axis of said cam (31) to bring said cam follower (53) in contact with said cam (31).

4. The automatic lathe as claimed in claim 2 or claim 3, wherein said step vibration cutting unit (7) has an elastic member (55) which always applies biasing force to said tool holder (47) in the direction of drilling.

5. The automatic lathe as claimed in claim 1, wherein said vibration cutting unit (7) comprises:
a housing (8) detachably mounted on said tool post (1);
a shaft (15) placed in said housing (8) and receiving transmission of rotary movement from said rotating driving source (6) of said tool post (1);
a cam (31) provided on said shaft (15); and
a tool holder (47) connected to said cam (31) at the base, said tool holder (47) being movable in a perpendicular direction to an axis of said cam (31).

6. The automatic lathe as claimed in claim 1, wherein said vibration cutting unit (7) comprises:
a housing (8) detachably mounted on said tool post (1);
a shaft (15) placed in said housing (8) and receiving transmission of rotary movement from said rotating driving source (6) of said tool post (1);
a cam (31) provided on said shaft (15); and
a tool holder (47) connected to said cam (31) at the base, said tool holder (47) being rotated by receiving a transmission of rotary movement from said rotating driving source (6), and being movable in a perpendicular direction to an axis of said cam (31).

7. The automatic lathe as claimed in claim 2 or claim 3 or claim 5 or claim 6, wherein vibration speed can be adjusted and set by selecting shape of said cam (31).

8. The automatic lathe as claimed in claim 2 or claim 3 or claim 5 or claim 6, wherein vibration speed can be adjusted and set by selecting rotation speed of said rotating driving source (6) of said tool post (1).

9. A drilling method of an automatic lathe comprising a step of drilling by applying vibration to a drilling tool (49) by using driving power transmitted from a rotating driving source (6) of a tool post (1).

10. The drilling method of an automatic lathe as claimed in claim 9, wherein said drilling is performed by applying step vibration to said drilling tool (49).

11. The drilling method of an automatic lathe as claimed in claim 9 or claim 10, further comprising a step of rotating said drilling tool (49) by using rotary power transmitted from said rotating driving source (6) of said tool post (1).
